# EUROPEAN PATENT APPLICATION

(11) **EP 4 819 295 A1**
(43) Date of publication of application: **07.10.2026**
(21) Application number: 24927736.9
(22) Date of filing: 04.03.2024
(51) Int. Cl.: H01M 10/613

(54) **HEAT EXCHANGE APPARATUS AND ENERGY STORAGE APPARATUS**

(71) Applicant: Contemporary Amperex Technology Co., Limited, Ningde, Fujian 352100 (CN)
(72) Inventor: LI, Qing, Ningde, Fujian 352100 (CN); YANG, Le, Ningde, Fujian 352100 (CN); OUYANG, Shijie, Ningde, Fujian 352100 (CN); YE, Weida, Ningde, Fujian 352100 (CN); LI, Jinkui, Ningde, Fujian 352100 (CN)
(74) Representative: Lorenz Seidler Gossel Part. mbB
(86) International application number: PCT/CN2024/079975
(87) International publication number: WO 2025/184784

(57) **Abstract**

Disclosed are a heat exchange apparatus and an energy storage apparatus. The heat exchange apparatus comprises a housing, which comprises an inner cavity and an air inlet and an air outlet that are in communication with the inner cavity; a heat exchange assembly, which comprises a condenser, the condenser being disposed in the inner cavity and being located between the air inlet and the air outlet; and a cross-flow fan, which is disposed in the inner cavity, the cross-flow fan comprising a rotatable cross-flow impeller, and the cross-flow impeller being located between the condenser and the air outlet.

## Description

### TECHNICAL FIELD

The present disclosure relates to the field of new energy technologies, and in particular, to a heat exchange apparatus and an energy storage apparatus.

### BACKGROUND

With the rapid development of new energy technologies, energy storage apparatuses have become one of the important research directions in the field of new energy. As important devices in energy storage apparatuses, heat exchange apparatuses have attracted much attention for their heat exchange efficiency and noise issues.

### SUMMARY

To solve the above technical problems, the present disclosure provides a heat exchange apparatus with high heat exchange efficiency and low noise, and an energy storage apparatus.

The present disclosure is implemented by the following technical solutions.

A first aspect of the present disclosure provides a heat exchange apparatus. A housing body includes an inner cavity as well as an air inlet and an air outlet that are in communication with the inner cavity; a heat exchange assembly includes a condenser, where the condenser is disposed in the inner cavity and located between the air inlet and the air outlet; a cross-flow fan is disposed in the inner cavity, where the cross-flow fan includes a rotatable cross-flow impeller, and the cross-flow impeller is located between the condenser and the air outlet.

By means of the rotation of the cross-flow impeller of the cross-flow fan, the heat in the inner cavity of the housing body is taken away, and the condenser is cooled at the same time. Compared with an axial flow fan provided for the housing body, the cross-flow fan can generate a higher air pressure at a lower rotation speed, such that the airflow has a larger coverage area and better uniformity when passing through the condenser, thereby improving the heat exchange efficiency and reducing the noise. In addition, since the cross-flow fan is located in the inner cavity, the noise can be further reduced compared with the axial flow fan disposed outside the housing body.

In some embodiments, the air outlet is configured as an elongated strip shape extending in a first direction, and an extension direction of a rotation axis of the cross-flow fan is consistent with the first direction.

The extension direction of the rotation axis of the cross-flow fan is consistent with a length direction of the air outlet, such that the cross-flow fan is more adapted to the air outlet, and the air outlet is smoother, which is beneficial to further reducing the noise and improving the heat exchange efficiency.

In some embodiments, in the first direction, the cross-flow impeller extends from one end of the air outlet to the other end of the air outlet.

The cross-flow impeller can cover the air outlet in an elongated strip shape in a rotation axis direction, thereby increasing the air outlet area, further reducing the noise, and improving the heat dissipation effect.

In some embodiments, the cross-flow fan and the condenser are disposed on a side adjacent to the air outlet.

The cross-flow fan and the condenser are disposed on the side adjacent to the air outlet, such that the air outlet path is shorter, the air outlet is smoother, and the heat dissipation effect is also improved.

In some embodiments, a maximum distance between a rotation axis center of the cross-flow impeller and one end of the condenser is substantially equal to a maximum distance between the rotation axis center of the cross-flow impeller and the other end of the condenser.

The maximum distance between the rotation axis center of the cross-flow impeller and one end of the condenser is substantially equal to the maximum distance between the rotation axis center of the cross-flow fan and the other end of the condenser, such that when the cross-flow impeller rotates, the airflow can cover the entire condenser as evenly as possible when passing through the condenser, thereby increasing the area of the airflow when passing through the condenser, improving the heat exchange efficiency of the condenser, and reducing the noise.

In some embodiments, a minimum distance between a rim of the cross-flow impeller and the condenser is greater than or equal to 10% of a radius of the cross-flow impeller.

An appropriate distance between the cross-flow impeller and the condenser helps to force the airflow to flow over the entire condenser range and accelerate heat dissipation, thereby improving the heat exchange efficiency and reducing the noise.

In some embodiments, the condenser includes a first surface facing the cross-flow fan, and the first surface includes at least one flat surface or at least one curved surface.

The curved surface can increase the heat exchange area of the condenser and improve the heat exchange efficiency.

In some embodiments, a projection of the first surface of the condenser in a second direction on a plane where the air outlet is located at least partially overlaps the air outlet, and the second direction is perpendicular to the first direction.

The first surface of the condenser overlaps the air outlet, such that the first surface of the condenser directly faces the outlet, thereby reducing the air resistance, allowing a smoother air outlet, and reducing the noise.

In some embodiments, the first surface is a flat surface and is inclined relative to the second direction.

The inclined condenser can increase the heat exchange area, thereby improving the heat exchange efficiency of the heat exchange apparatus.

In some embodiments, the first surface is a curved surface and partially surrounds the cross-flow impeller.

Such a configuration of the cross-flow impeller and the condenser also helps to quickly guide the airflow out of the housing body while increasing the heat exchange area.

In some embodiments, the first surface of the condenser is a circular arc surface, and the rotation axis center of the cross-flow impeller coincides with a center of the circular arc surface.

The rotation axis center of the cross-flow impeller coincides with the center of the circular arc surface of the condenser, such that the distance between the rotation axis center of the cross-flow impeller and each position of the circular arc surface of the condenser is the same, thereby further improving the uniformity of the airflow passing through the condenser, improving the heat exchange efficiency of the condenser, and reducing the noise.

In some embodiments, the housing body includes a first housing wall and a second housing wall opposite to each other in a third direction; the air outlet is located between the first housing wall and the second housing wall, and two ends of the condenser are disposed on the first housing wall and the second housing wall, respectively; the third direction is perpendicular to both a first direction and a second direction.

The two ends of the condenser are disposed on the first housing wall and the second housing wall, respectively, such that the possibility of air leakage between the condenser and the housing body is reduced, thereby enabling more airflow to pass through the condenser and improving the heat exchange efficiency.

In some embodiments, the cross-flow fan includes a fan casing and a cross-flow impeller rotatably disposed in the fan casing; the fan casing includes an inner-side flow guide surface, and the inner-side flow guide surface is configured to guide an airflow toward a side of the air outlet.

The inner-side flow guide surface enables the airflow to be exhausted from the air outlet more smoothly, thereby reducing the air resistance and noise.

In some embodiments, the heat exchange assembly further includes a compressor, an evaporator, and an expansion valve, and the compressor, the condenser, the evaporator, and the expansion valve are in communication through a refrigerant circulation pipeline.

Through the refrigerant circulation loop, heat exchange can be continuously performed for the battery in the energy storage apparatus, thereby reducing the risk of thermal runaway of the battery.

A second aspect of the present disclosure provides an energy storage apparatus. The energy storage apparatus includes: an energy storage case, accommodating at least one battery; and the heat exchange apparatus according to any one of the above embodiments, where the heat exchange apparatus is configured to exchange heat with the battery.

In some embodiments, the heat exchange apparatus is disposed in the energy storage case, and the energy storage case is provided with an air exhaust port in communication with the air outlet.

The embodiments of the present disclosure have the following beneficial effects:

According to the present disclosure, a heat exchange apparatus with high heat exchange efficiency and low noise and an energy storage apparatus are provided.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present disclosure. Throughout all the drawings, the same components are denoted by the same reference numerals. In the drawings:
FIG. 1 is a schematic structural diagram of a heat exchange apparatus according to some embodiments of the present disclosure;
FIG. 2 is a schematic exploded diagram of a battery pack according to some embodiments of the present disclosure;
FIG. 3 is a schematic structural diagram of a battery module group according to some embodiments of the present disclosure;
FIG. 4 is a schematic exploded diagram of a heat exchange apparatus according to some embodiments of the present disclosure;
FIG. 5 is a schematic side view of a heat exchange apparatus according to some embodiments of the present disclosure;
FIG. 6 is a schematic top view of a heat exchange apparatus according to some embodiments of the present disclosure;
FIG. 7 is a schematic top view of a heat exchange apparatus according to some other embodiments of the present disclosure;
FIG. 8 is a schematic top view of a heat exchange apparatus according to yet some other embodiments of the present disclosure; and
FIG. 9 is a schematic structural diagram of a heat exchange assembly according to still some other embodiments of the present disclosure.

Description of the reference numerals:
1000-energy storage apparatus; 110-energy storage case body; 120-battery; 1-battery cell; 2-bottom plate; 3-vertical plate; 4-cover body;
100-heat exchange apparatus;
10-housing body; 11-air inlet; 12-air outlet; 10a-inner cavity;
20-heat exchange assembly; 21-condenser; 22-compressor; 23-evaporator; 24-expansion valve; 21a-first end; 21b-second end;
30-cross-flow fan; 31-cross-flow impeller; 32-fan casing;
O-rotation axis;
L-the plane where the center of the housing body is located.

### DETAILED DESCRIPTION

The following describes in detail embodiments of technical solutions of the present disclosure with reference to the drawings. The following embodiments are merely used to more clearly illustrate the technical solutions of the present disclosure, and therefore, are only exemplary and do not limit the protection scope of the present disclosure.

Unless otherwise defined, all technical and scientific terms used herein have the same meaning as commonly understood by those skilled in the art to which the present disclosure relates. The terms used herein are intended to merely describe the specific embodiments, rather than to limit the present disclosure. The terms "include", "comprise", "have", and "provided with", and any other variations thereof in this specification and the description of the drawings of the present disclosure are intended to cover non-exclusive inclusions.

In the description of the embodiments of the present disclosure, the technical terms "first", "second", and the like are merely intended to distinguish different objects and should not be understood as any indication or implication of relative importance or any implicit indication of the number, specific sequence, or primary-secondary relationship of the technical features indicated. In the description of the embodiments of the present disclosure, unless otherwise specifically defined, "plurality of" means two or more.

Reference in the present disclosure to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present disclosure, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the technical terms "length", "width", "thickness", "upper", "lower", "front", "rear", "left", "right", "vertical", "horizontal", "top", "bottom", "inner", "outer", "circumferential direction", and the like indicating directional or positional relationships are based on the directional or positional relationships shown in the drawings. They are merely for the convenience of describing the embodiments of the present application and simplifying the description, and are not intended to indicate or imply that the devices or elements referred to must have specific directions, be constructed, operated, or used in specific directions. Therefore, these terms should not be construed as limitations on the embodiments of the present application.

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise clearly specified and defined, the technical term "contact" should be interpreted in a broad sense. For example, the "contact" may be direct contact, or contact through an intermediate medium layer, or contact without an interaction force between two contacting elements, or contact with an interaction force between two contacting elements.

The present disclosure is described in detail below.

With the rapid development of new energy technologies, energy storage apparatuses have become one of the important research directions in the field of new energy. As important devices in energy storage apparatuses, heat exchange apparatuses have attracted much attention for their heat exchange efficiency and noise issues.

During the operation of a heat exchange apparatus (heat exchange unit), a large amount of heat is generated, which affects the heat exchange efficiency. In the heat exchange apparatus, the condenser located inside the housing body is the main heat-generating component. Currently, the heat generated by the condenser is exhausted from the housing body by using an axial flow fan. Since the airflow generated by the axial flow fan is relatively concentrated, the airflow passing through the condenser has poor uniformity, excessive noise, and poor heat dissipation, resulting in low heat exchange efficiency of the condenser.

In this regard, a heat exchange apparatus is designed according to the present disclosure. The heat exchange apparatus includes: a housing body, including an inner cavity as well as an air inlet and an air outlet that are in communication with the inner cavity; a heat exchange assembly, including a condenser, where the condenser is disposed in the inner cavity and located between the air inlet and the air outlet; and a cross-flow fan, disposed in the inner cavity, where the cross-flow fan includes a rotatable cross-flow impeller, and the cross-flow impeller is located between the condenser and the air outlet.

The heat generated during the operation of the condenser is taken away by the cross-flow fan. Compared with an axial flow fan, the airflow has a larger area and better uniformity when passing through the condenser, such that the heat dissipation effect and the heat exchange efficiency of the condenser can be improved, and the noise can be reduced.

The heat exchange apparatus of the present disclosure can be applied to an energy storage apparatus to exchange heat with the batteries in the energy storage apparatus. Since the heat exchange efficiency of the heat exchange apparatus is improved and the noise is reduced, the heat exchange efficiency with the batteries in the energy storage apparatus is also improved, and the noise of the entire energy storage apparatus is also reduced.

The energy storage apparatus of the present disclosure is applicable to the field of renewable energy storage, such as power energy storage, photovoltaic energy storage, and wind power energy storage, and is also applicable to electric vehicle charging and other fields.

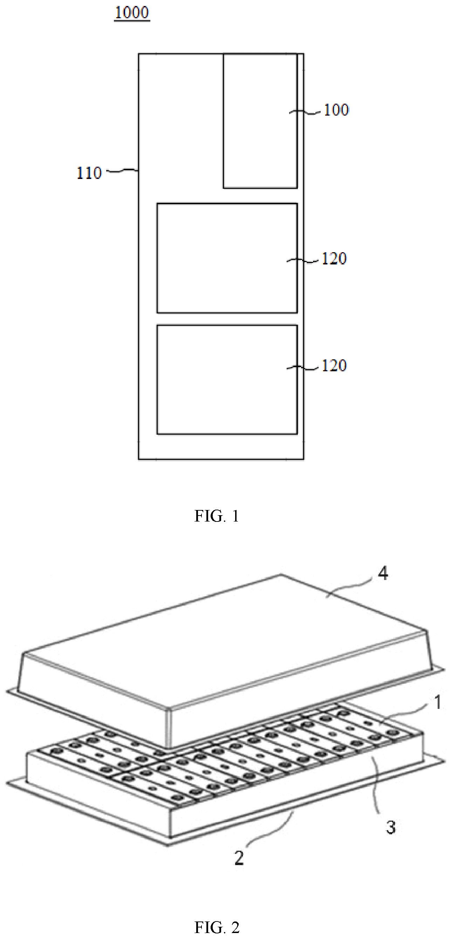

Referring to FIG. 1, the energy storage apparatus 1000 may include an energy storage case body 110 and at least one battery 120 accommodated in the energy storage case body 110. The energy storage apparatus 1000 may further include a heat exchange apparatus 100, and the heat exchange apparatus 100 is configured to exchange heat with the battery 120, thereby performing thermal management on the battery 120. The energy storage apparatus 1000 may be an energy storage container or an energy storage electrical cabinet.

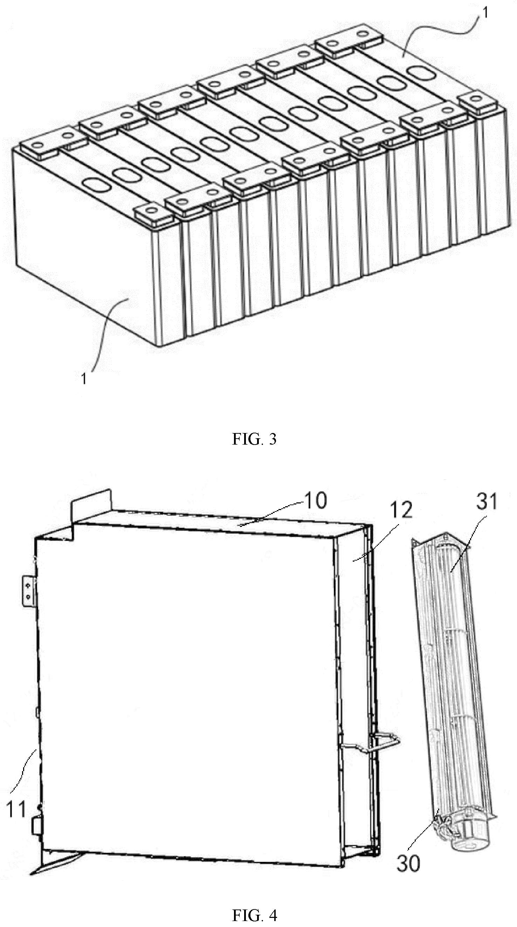

Referring to FIGs. 2 and 3, the battery 120 mentioned in the embodiments of the present disclosure may be a battery cell 1.

The battery cell 1 may be a secondary battery, which refers to a battery cell that can continue to be used by activating the active material by means of charging after the battery cell is discharged.

The battery cell 1 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present disclosure.

The battery cell 1 generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present disclosure is not limited to these materials, and other conventional materials that can be used as the positive electrode active material in batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, a foam metal may be used as the positive electrode. The foam metal may be foam nickel, foam copper, foam aluminum, foam alloy, foam carbon, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into and/or deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The foam metal may be foam nickel, foam copper, foam aluminum, foam alloy, foam carbon, or the like. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene). In some embodiments, the material of the positive electrode current collector may be aluminum, and the material of the negative electrode current collector may be copper.

In some embodiments, the electrode assembly further includes a separator. The separator is disposed between the positive electrode and the negative electrode.

In some embodiments, the separator is a separation film. The present disclosure does not particularly limit the type of separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell 1 further includes an electrolyte that serves to conduct ions between the positive electrode and the negative electrode. The present disclosure does not particularly limit the type of electrolyte, which may be selected according to needs. The electrolyte may be liquid-state, gel-state, or solid-state.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, polygonal prismatic, or the like.

In some embodiments, the electrode assembly is provided with tabs that can conduct current out of the electrode assembly. The tabs include a positive electrode tab and a negative electrode tab.

In some embodiments, the battery cell 1 may include a battery housing. The battery housing is configured to encapsulate components such as the electrode assembly and the electrolyte. The battery housing may be a steel housing, an aluminum housing, a plastic housing (such as polypropylene), a composite metal housing (such as a copper-aluminum composite housing), an aluminum-plastic film, or the like.

As an example, the battery cell 1 may be a cylindrical battery cell, a prismatic battery cell, a pouch battery cell, or a battery cell of other shapes. The prismatic battery cell includes a square-housing battery cell, a blade-shaped battery cell, and a polygonal prismatic battery, and the polygonal prismatic battery is, for example, a hexagonal prismatic battery. This is not particularly limited in the present disclosure.

In some embodiments, the battery housing includes an end cover and a battery housing body. The housing body is provided with an opening, and the end cover closes the opening to form a sealed space for accommodating the electrode assembly, the electrolyte, and other substances. The battery housing body may be provided with one or more openings. There may also be one or more end covers.

In some embodiments, at least one electrode terminal is provided on the battery housing, and the electrode terminal is electrically connected to the tabs. The electrode terminal may be directly connected to the tabs or may be indirectly connected to the tabs by an adapting component. The electrode terminal may be disposed on the end cover or may be disposed on the battery housing body.

In some embodiments, the battery housing is provided with a pressure relief mechanism. The pressure relief mechanism is configured to relieve the internal pressure of the battery cell.

Referring to FIG. 3, the battery 120 mentioned in the embodiments of the present disclosure may be a battery module, and the battery module includes one or more battery cells 1 to provide a single physical module with higher voltage and capacity. When there are a plurality of battery cells 1, the plurality of battery cells are connected in series, in parallel, or in series-parallel by a busbar component. The plurality of battery cells 1 are arranged and fixed to form one battery module.

Referring to FIG. 2, the battery 120 mentioned in the embodiments of the present disclosure may be a battery pack. The battery pack includes a battery case and at least one battery cell 1, and the battery cell 1 is accommodated in the battery case. The battery case may include a bottom plate 2, a vertical plate 3, and a cover body 4. The cover body 4 covers the bottom plate 1 and the vertical plate 3 from above, such that the bottom plate 2, the vertical plate 3, and the cover body 4 jointly form an accommodation space for accommodating the battery cell 1.

Some embodiments of the present disclosure will be described in detail below with reference to FIGs. 4 to 9.

The embodiments of the present disclosure provide a heat exchange apparatus 100. The heat exchange apparatus includes: a housing body 10, a heat exchange assembly 20, and a cross-flow fan 30.

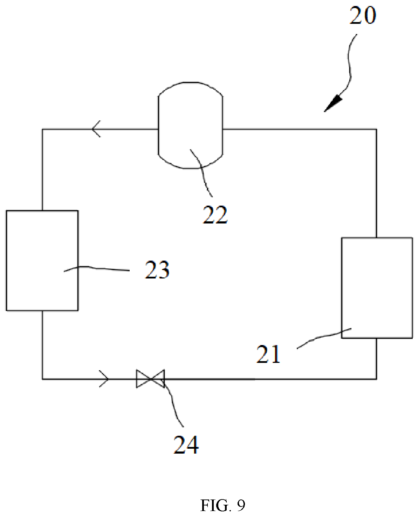

The housing body 10 includes an inner cavity 10a, and an air inlet 11 and an air outlet 12 that are in communication with the inner cavity 10a. The heat exchange assembly 20 (shown in FIG. 9) includes a condenser 21, and the condenser 21 is disposed in the inner cavity 10a and located between the air inlet 11 and the air outlet 12. The cross-flow fan 30 is disposed in the inner cavity 10a; the cross-flow fan 30 includes a rotatable cross-flow impeller 31, and the cross-flow impeller 31 is located between the condenser 21 and the air outlet 12.

The inner cavity 10a is formed inside the housing body 10 for accommodating the heat exchange assembly 20 and the cross-flow fan 30, and also serves as an air duct communicating the air inlet 11 with the air outlet 12. The air outlet 12 may be fully open or partially open on one side of the housing body 10. The air inlet 11 may be located on an opposite side or an adjacent side of the air outlet 12. As an example, referring to FIG. 4, the housing body 10 is in a rectangular parallelepiped shape, and the air outlet 12 is formed on the narrower side of the rectangular parallelepiped.

The condenser 21 is located between the air inlet 11 and the air outlet 12. The situation may be that the condenser 21 is provided with a windward surface on a windward side and a leeward surface (also referred to as a first surface) on a leeward side, the windward surface being a surface on a side close to the air inlet 11, and the leeward surface being a surface on a side close to the air outlet 12.

The cross-flow fan 30 is disposed between the condenser 21 and the air outlet 12. The situation may be that the cross-flow impeller 31 of the cross-flow fan 30 faces the leeward surface of the condenser 21.

The rotation of the cross-flow impeller 31 drives the airflow from the air inlet 11 into the inner cavity 10a, and from the windward surface to the leeward surface of the condenser 21, and then out of the housing body 10 through the air outlet 12, thereby taking away the heat in the inner cavity 10a and cooling the condenser 21.

The cross-flow fan 30 takes away the heat in the inner cavity 10a and cools the condenser 21. Compared with an axial flow fan provided for the housing body 10, the cross-flow fan can form a higher air pressure at a lower rotation speed, such that the airflow passing through the condenser has a larger area and better uniformity, and the air resistance is reduced, thereby improving the heat exchange efficiency and reducing the noise. In addition, since the cross-flow fan 30 is located in the inner cavity 10a, the noise can be further reduced compared with the axial flow fan disposed outside the housing body 10.

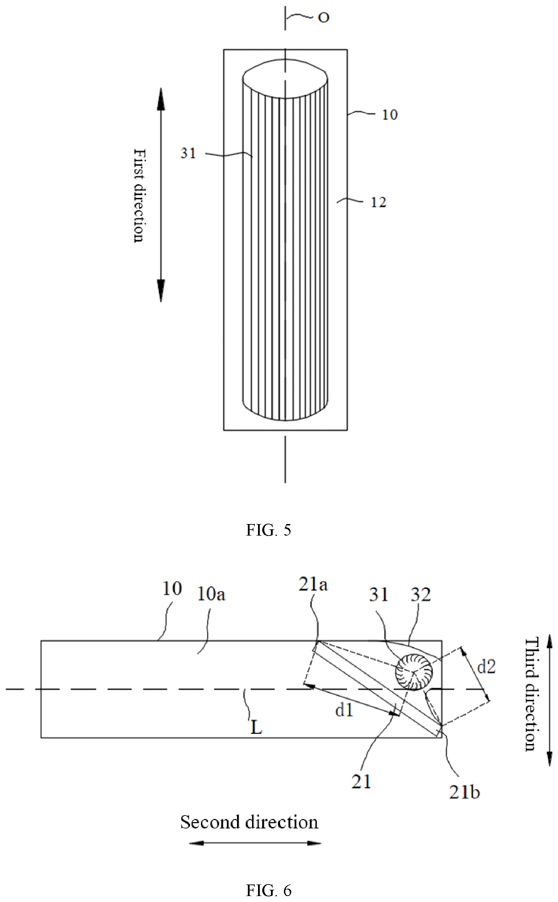

In some embodiments, referring to FIGs. 4 and 5, the air outlet 12 is configured as an elongated strip shape extending in a first direction, and an extension direction of a rotation axis O of the cross-flow fan 30 is consistent with the first direction. The first direction may be, for example, an up-down direction. The air outlet 12 may be an opening on one side of the housing body 10.

The extension direction of the rotation axis O of the cross-flow impeller 31 of the cross-flow fan 30 is consistent with a length direction of the air outlet 12, such that the cross-flow fan 30 and the air outlet 12 are arranged more adaptively, thereby enabling smoother and more uniform air outlet, which is beneficial to further reducing the noise and improving the heat exchange efficiency.

In the embodiments of the present application, for ease of description, the cross-flow fan in FIGs. 4 to 9 only illustratively shows the structures of the cross-flow impeller 31 and part of a fan casing 32, with other structures of the cross-flow fan omitted.

In some embodiments, in the first direction, the cross-flow impeller 31 extends from one end of the air outlet 12 to the other end of the air outlet.

Therefore, the cross-flow impeller 31 can cover the air outlet 12 in an elongated strip shape in a rotation axis direction, thereby increasing the air outlet area, further reducing the noise, and improving the heat dissipation effect.

In some embodiments, the cross-flow fan 30 and the condenser 21 are disposed at positions adjacent to the air outlet 12.

The cross-flow fan 30 and the condenser 21 are disposed at positions adjacent to the air outlet 12, such that the air outlet distance is shorter, the air outlet is smoother, and at the same time, the heat dissipation effect is improved.

In some embodiments, referring to FIGs. 6 to 8, the maximum distance d1 between the rotation axis center of the cross-flow impeller 31 and one end of the condenser 21 is substantially equal to the maximum distance d2 between the rotation axis center of the cross-flow impeller 31 and the other end of the condenser 21.

The maximum distance refers to the distance of a horizontal connecting line with the rotation axis center of the cross-flow impeller 31 as the starting point and one end of the condenser 21 as the ending point. The term "substantially equal to" may be understood as being equal to or approximately equal to. The rotation axis center of the cross-flow impeller 31 is substantially located on a perpendicular bisector of the horizontal connecting line connecting the two opposite ends (a first end 21a and a second end 21b) of the condenser 21. An isosceles triangle is formed by the horizontal connecting line between the two opposite ends of the condenser 21, the horizontal connecting line between the rotation axis center of the cross-flow impeller 31 and one end (the first end 21a) of the condenser 21, and the horizontal connecting line between the rotation axis center of the cross-flow impeller 31 and the other end (the second end 21b) of the condenser 21.

Referring to FIGs. 6 to 8, in a top view, the distance d1 of the horizontal connecting line between the rotation axis center of the cross-flow impeller 31 of the cross-flow fan 30 and the first end 21a of the condenser 21 is substantially equal to the distance d2 of the horizontal connecting line between the rotation axis center of the cross-flow impeller 31 of the cross-flow fan 30 and the second end 21b of the condenser 21.

The maximum distance between the rotation axis center of the cross-flow impeller 31 and one end of the condenser 21 is substantially equal to the maximum distance between the rotation axis center of the cross-flow impeller 31 and the other end of the condenser 21, such that when the cross-flow impeller 31 rotates, the airflow passing through the condenser 21 can cover the entire condenser 21 as evenly as possible, and the airflow passes through the condenser 21 more uniformly, thereby further improving the heat exchange efficiency of the condenser 21 and reducing the noise.

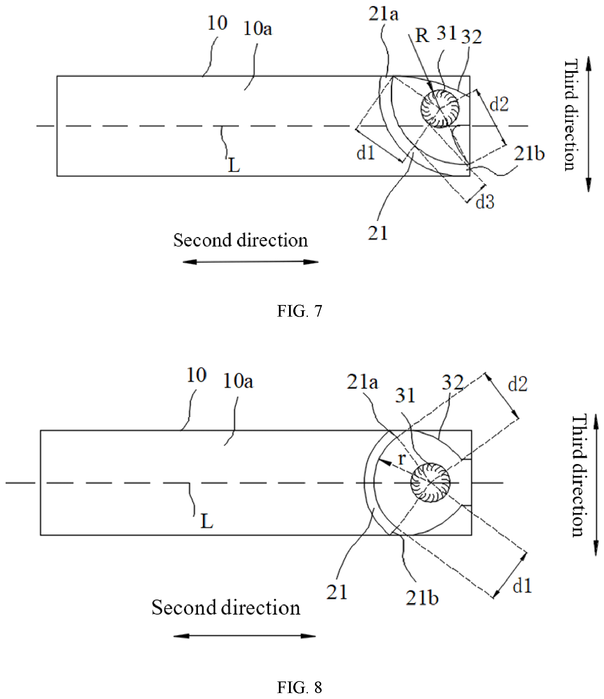

In some embodiments, the minimum distance d3 (shown in FIG. 7) between the rotation axis center of the cross-flow impeller 31 and the condenser 21 is greater than or equal to 10% of the radius R of the cross-flow impeller 31.

An appropriate distance between the cross-flow impeller 31 and the condenser 21 helps to force the airflow to flow over the entire condenser 21 range and accelerate heat dissipation, thereby improving the heat exchange efficiency and reducing the noise.

In some embodiments, the condenser 21 includes a first surface facing the cross-flow fan 30, and the first surface includes at least one flat surface or at least one curved surface.

The condenser 21 is provided with a first surface (leeward surface) facing the cross-flow fan 30 and a windward surface facing away from the cross-flow fan 30. The first surface may be formed by one surface or a plurality of surfaces. For example, the first surface of the condenser 21 is a flat surface or a curved surface formed by one surface, and the curved surface may be a curved surface protruding toward the cross-flow fan 30 or a curved surface protruding away from the cross-flow fan 30. For another example, the first surface of the condenser 21 is a curved surface enclosed by a plurality of surfaces, and the plurality of surfaces may be flat surfaces and/or curved surfaces. The arc-shaped first surface may be formed by connecting and splicing a plurality of condensers to each other in an enclosing manner, or may be formed by bending one condenser.

FIG. 6 illustratively shows that the first surface of the condenser 21 is a flat surface. FIGs. 7 and 8 illustratively show that the first surface of the condenser 21 is a curved surface.

The first surface of the condenser 21 is a curved surface, which can increase the heat exchange area of the condenser 21 and improve the heat exchange efficiency.

In some embodiments, the projection of the first surface of the condenser 21 in a second direction on a plane where the air outlet 12 is located at least partially overlaps the air outlet 12, the second direction being perpendicular to the first direction.

When the first surface of the condenser 21 completely overlaps the air outlet 12, the area of the condenser 21 is substantially equal to the area of the air outlet 12. When the first surface of the condenser 21 partially overlaps the air outlet 12, the area of the condenser 21 may be greater than the area of the air outlet 12.

For example, referring to FIGs. 6 to 8, the housing body 10 is a rectangular parallelepiped and is provided with an opening on one side in the second direction, the opening serves as the air outlet 12, and the first surface of the condenser 21 may be perpendicular to the second direction. In this case, the first surface of the condenser 21 completely overlaps the air outlet 12. The first surface of the condenser 21 may be inclined relative to the second direction. In this case, the first surface of the condenser 21 partially overlaps the air outlet 12.

The projection of the first surface of the condenser 21 in the second direction on the plane where the air outlet 12 is located at least partially overlaps the air outlet 12, such that the condenser at least partially directly faces the outlet, thereby reducing the air resistance, allowing a smoother air outlet, and reducing the noise.

In some embodiments, the first surface of the condenser 21 is a flat surface and is inclined relative to the second direction.

Compared with a condenser disposed perpendicular to the second direction, the inclined condenser can increase the heat exchange area, thereby improving the heat exchange efficiency.

Referring to FIGs. 6 and 7, in a specific example, the housing body 10 is substantially configured as a rectangular parallelepiped shape, and the first surface of the condenser 21 intersects with a plane L where the center of the housing body 10 is located and is asymmetric with respect to the plane L where the center of the housing body 10 is located. The plane L where the center of the housing body 10 is located is a plane extending in the first direction and the second direction and is perpendicular to a third direction, and a center line of the housing body 10 extending in the first direction and a center line of the housing body extending in the second direction are located in the plane.

As an example, referring to FIG. 6, in a top view, the first surface of the condenser 21 is substantially a flat surface and intersects with the plane L where the center of the housing body 10 is located to form an acute angle; that is, the first surface is inclined relative to the plane L where the center of the housing body 10 is located. The rotation axis center of the cross-flow impeller 31 is biased to one side relative to the plane L where the center of the housing body 10 is located, for example, at a corner position of the housing body 10 as shown in FIG. 6. Compared with a shape perpendicular to and symmetric with respect to the plane L where the center of the housing body 10 is located, the inclined condenser 21 has a larger heat exchange area, thereby improving the heat exchange efficiency of the heat exchange apparatus 21.

As another example, referring to FIG. 7, in a top view, the first surface of the condenser 21 is substantially a circular arc surface, and the straight connecting line between the two opposite ends (the first end 21a and the second end 21b) of the condenser 21 intersects with the plane L where the center of the housing body 10 is located to form an acute angle, such that the first surface of the condenser 21 is asymmetric with respect to the plane L where the center of the housing body is located. The rotation axis center of the cross-flow impeller 31 is biased to one side relative to the plane L where the horizontal center of the housing body 10 is located. Compared with a symmetric configuration, the condenser 21 has a larger heat exchange area, thereby improving the heat exchange efficiency of the heat exchange apparatus 21. Such a configuration of the cross-flow impeller 31 and the condenser 21 also helps to quickly guide the airflow out of the housing body 10 while increasing the heat exchange area. It should be noted that the condenser 21 shown in FIG. 7 is asymmetric with respect to the plane L, but the condenser 21 shown in FIG. 7 itself may be symmetric in shape.

In some embodiments, the first surface of the condenser 21 intersects with the plane L where the center of the housing body 10 is located and is symmetric with respect to the plane L where the center of the housing body is located.

As an example, referring to FIG. 8, in a top view, the first surface of the condenser 21 is substantially a circular arc surface, the horizontal connecting line between the two opposite ends (the first end 21a and the second end 21b) of the condenser 21 is perpendicular to the plane L where the horizontal center of the housing body 10 is located, and the first surface of the condenser 21 is symmetric with respect to the plane L where the horizontal center of the housing body 10 is located. The rotation axis center of the cross-flow impeller 31 is located on the plane L where the horizontal center of the housing body 10 is located. Compared with an asymmetric configuration, the airflow can be allowed to pass through the condenser 21 more uniformly, thereby facilitating uniform heat exchange and reducing the noise.

The first surface of the condenser 21 intersects with the plane L where the center of the housing body 10 is located, and is symmetric with respect to the plane L where the center of the housing body is located, such that the uniformity of the airflow passing through the condenser 21 can be improved, thereby facilitating uniform heat exchange and reducing the noise.

In some embodiments, the first surface of the condenser 21 is a curved surface and partially surrounds the cross-flow impeller 31.

The curved opening of the first surface of the condenser 21 faces the cross-flow impeller 31; that is, the concave portion of the curved surface faces the cross-flow impeller 31.

The first surface is a curved surface and partially surrounds the cross-flow impeller, such that the heat exchange area of the airflow passing through the condenser can be increased, thereby further improving the heat exchange efficiency of the condenser and reducing the noise.

In some embodiments, referring to FIGs. 7 and 8, the first surface of the condenser 21 is a circular arc surface, and the rotation axis center of the cross-flow impeller 31 coincides with the center of the circular arc surface of the condenser 21.

In the specific example shown in FIG. 8, the first surface of the condenser 21 may be considered as a cylindrical surface segment of an imaginary cylindrical surface having a center coinciding with the axis center of the cross-flow impeller 31 and having a radius of r. In this case, the maximum distance between the rotation axis center of the cross-flow impeller 31 and one end of the condenser 21 is equal to or substantially equal to the maximum distance d2 between the rotation axis center of the cross-flow impeller 31 and the other end of the condenser 21.

The rotation axis center of the cross-flow impeller 31 coincides with the center of the circular arc surface of the condenser 21, such that the distance between the rotation axis center of the cross-flow impeller 31 and each position of the circular arc surface of the condenser 21 is the same, thereby further improving the uniformity of the airflow passing through the condenser 21, improving the heat exchange efficiency of the condenser 21, and reducing the noise.

In some embodiments, referring to FIGs. 6 to 8, the housing body 10 includes a first housing wall and a second housing wall opposite to each other in the third direction; the air outlet 12 is located between the first housing wall and the second housing wall, and the two ends of the condenser 21 are disposed on the first housing wall and the second housing wall, respectively; the third direction is perpendicular to both the first direction and the second direction.

The two ends (the first end 21a and the second end 21b) of the condenser 21 may abut against or be bonded to the first housing wall and the second housing wall, respectively, thereby improving the sealing effect between the condenser 21 and the housing body 10 and reducing the risk of air leakage. Therefore, the airflow in the inner cavity 10a of the housing body 10 fully passes through the condenser 21, thereby reducing the risk of air leakage and improving the heat exchange efficiency.

In some embodiments, the cross-flow fan 30 includes a fan casing 32, and the cross-flow impeller 31 is rotatably disposed in the fan casing 32. The fan casing 32 includes an inner-side flow guide surface, and the inner-side flow guide surface is configured to guide the airflow toward the air outlet 12 side.

The fan casing 32 is provided with an air intake port, an air exhaust port, and an air duct located between the air intake port and the air exhaust port. The cross-flow impeller 31 is rotatably disposed in the air duct, and the cross-flow impeller 31 can be driven to rotate by a motor fixed on the fan casing 32. The inner-side flow guide surface of the fan casing 32 is a surface facing the cross-flow impeller 31. The air intake port of the fan casing 32 faces the condenser 21, and the air exhaust port of the fan casing 32 is in communication with the air outlet. For example, the air exhaust port is located at the air outlet, and the opening size of the air exhaust port is consistent with that of the air outlet.

The inner-side flow guide surface enables the airflow to be exhausted from the air outlet 12 more smoothly, thereby reducing the air resistance and noise.

As an example, the inner-side flow guide surface is a curved surface.

The curved inner-side flow guide surface further enables the airflow to be exhausted from the air outlet 12 more smoothly, thereby reducing the air resistance and noise.

In some embodiments, referring to FIG. 9, the heat exchange assembly 20 further includes a compressor 22, an evaporator 23, and an expansion valve 24. The compressor 22, the condenser 21, the evaporator 23, and the expansion valve 24 are sequentially in communication through a refrigerant circulation pipeline, thereby forming a refrigerant circulation loop. The refrigerant may be Freon.

As an example, the evaporator 23 may include two flow channels. One of the flow channels is used as a refrigerant flow channel for the circulation of the refrigerant, and the other flow channel is used as a liquid cooling flow channel for communication with the battery heat exchange member in the energy storage apparatus, thereby exchanging heat with the battery by means of the battery heat exchange member.

Through the refrigerant circulation loop, heat exchange can be continuously performed for the battery in the energy storage apparatus, thereby reducing the risk of thermal runaway of the battery.

A specific example of the present disclosure will be described below.

The embodiments of the present disclosure provide a heat exchange apparatus. Referring to FIGs. 4 to 9, provided are a housing body 10, a heat exchange assembly 20, and a cross-flow fan 30.

The housing body 10 is provided with an air inlet 11, an air outlet 12, and an inner cavity 10a in communication with the air inlet 11 and the air outlet 12. An air duct is formed in the inner cavity 10a, and the air outlet 12 is an elongated strip-shaped opening extending in the first direction on one side of the housing body 10. The heat exchange assembly 20 is disposed in the inner cavity 10a and includes a compressor 22, an evaporator 23, an expansion valve 24, and a condenser 21 that are sequentially in communication through a refrigerant circulation pipeline, where the refrigerant is Freon. The condenser 21 is located between the air inlet 11 and the air outlet 12, and the condenser 21 is provided with a windward surface and a first surface. The windward surface is close to the side of the air inlet 11, the first surface is close to the side of the air outlet 12, and the first surface may be a flat surface or a curved surface. The condenser 21 abuts against the housing body 10. The cross-flow fan 30 is disposed in the cavity body, close to the air outlet 12 side, of the inner cavity 10a, and is located between the condenser 21 and the air outlet 12. The cross-flow fan 30 includes a fan casing 32 and a cross-flow impeller 31 rotatably disposed in the fan casing 32. The fan casing 32 is provided with an inlet end, an outlet end, and an air cavity located between the inlet end and the outlet end. The cross-flow impeller 31 is located in the air cavity. The inlet end of the fan casing 32 faces the first surface of the condenser 21, and the outlet end of the fan casing 32 is in communication with the air outlet 12. The extension direction of the rotation axis of the cross-flow impeller 31 is consistent with the extension direction of the elongated strip-shaped air outlet of the housing body 10. The maximum distance between the rotation axis center of the cross-flow impeller 31 and one end of the condenser 21 is substantially equal to the maximum distance between the rotation axis center of the cross-flow impeller 31 and the other end of the condenser 21.

The cross-flow fan 30 takes away the heat in the inner cavity 10a and cools the condenser 21. Compared with an axial flow fan, the cross-flow fan can enable the airflow passing through the condenser to have a larger area and better uniformity, and reduce the air resistance, thereby improving the heat exchange efficiency and reducing the noise. In addition, since the cross-flow fan 30 is located in the inner cavity 10a, the noise can be further reduced compared with the axial flow fan disposed outside the housing body 10. The maximum distance between the rotation axis center of the cross-flow impeller 31 and one end of the condenser 21 is substantially equal to the maximum distance between the rotation axis center of the cross-flow fan 30 and the other end of the condenser 21, such that when the cross-flow impeller 31 rotates, the airflow can cover the entire condenser 21 as much as possible, and the airflow passes through the condenser 21 more uniformly, thereby further improving the heat exchange efficiency of the condenser 21 and reducing the noise.

A second aspect of the present disclosure provides an energy storage apparatus. Referring to FIG. 1, the energy storage apparatus includes: an energy storage case 110, accommodating at least one battery 120; the heat exchange apparatus 100 mentioned in any one of the above embodiments; and a battery heat exchange member, where the battery 120 exchanges heat with the heat exchange apparatus 100 by means of the battery heat exchange member.

As an example, the battery heat exchange member includes a liquid circulation pipeline and a circulation pump for driving liquid in the liquid circulation pipeline to circulate, and the battery exchanges heat with the heat exchange apparatus by means of the liquid circulation pipeline. The liquid circulation pipeline may be in communication with a liquid cooling flow channel of the evaporator 23, thereby exchanging heat with the evaporator 23. The battery heat exchange member may further include a plurality of heat exchange plates, and the heat exchange plates are connected in parallel with each other and in communication with the liquid circulation pipeline; the battery exchanges heat with the liquid in the liquid circulation pipeline by means of the heat exchange plates.

In some embodiments, the heat exchange apparatus 100 is disposed in the energy storage case 10, and the energy storage case 10 is provided with an air exhaust port in communication with the air outlet 12. The airflow exhausted from the air outlet 12 of the heat exchange apparatus 100 is exhausted from the energy storage case 10 through the air exhaust port.

The foregoing embodiments are merely used to illustrate the technical solutions of the present disclosure, rather than limit the same. Although the present disclosure has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present disclosure, and shall all fall within the scope of the claims and specification of the present disclosure. In particular, the technical features mentioned in the embodiments can be combined in any manner, provided that there is no structural conflict. The present disclosure is not limited to the specific embodiments disclosed herein, but encompasses all technical solutions falling within the scope of the claims.

### INDUSTRIAL APPLICABILITY

According to the present disclosure, a heat exchange apparatus with high heat exchange efficiency and low noise and an energy storage apparatus are provided.

## Claims

1. A heat exchange apparatus, comprising:
a housing body, comprising an inner cavity as well as an air inlet and an air outlet that are in communication with the inner cavity;
a heat exchange assembly, comprising a condenser, wherein the condenser is disposed in the inner cavity and located between the air inlet and the air outlet; and
a cross-flow fan, disposed in the inner cavity, wherein the cross-flow fan comprises a rotatable cross-flow impeller, and the cross-flow impeller is located between the condenser and the air outlet.

2. The heat exchange apparatus according to claim 1, wherein
the air outlet is configured as an elongated strip shape extending in a first direction, and an extension direction of a rotation axis of the cross-flow impeller is consistent with the first direction.

3. The heat exchange apparatus according to claim 2, wherein
in the first direction, the cross-flow impeller extends from one end of the air outlet to the other end of the air outlet.

4. The heat exchange apparatus according to any one of claims 1 to 3, wherein
the cross-flow fan and the condenser are disposed at positions adjacent to the air outlet.

5. The heat exchange apparatus according to any one of claims 1 to 4, wherein
a maximum distance between a rotation axis center of the cross-flow impeller and one end of the condenser is substantially equal to a maximum distance between the rotation axis center of the cross-flow impeller and the other end of the condenser.

6. The heat exchange apparatus according to claim 5, wherein
a minimum distance between a rim of the cross-flow impeller and the condenser is greater than or equal to 10% of a radius of the cross-flow impeller.

7. The heat exchange apparatus according to claim 5, wherein
the condenser comprises a first surface facing the cross-flow impeller, and the first surface comprises at least one flat surface or at least one curved surface.

8. The heat exchange apparatus according to claim 7, wherein
a projection of the first surface of the condenser in a second direction on a plane where the air outlet is located at least partially overlaps the air outlet, and the second direction is perpendicular to the first direction.

9. The heat exchange apparatus according to claim 8, wherein
the first surface is a flat surface and is inclined relative to the second direction.

10. The heat exchange apparatus according to claim 8, wherein
the first surface is a curved surface and partially surrounds the cross-flow impeller.

11. The heat exchange apparatus according to claim 10, wherein
the first surface is a circular arc surface, and the rotation axis center of the cross-flow impeller coincides with a center of the circular arc surface.

12. The heat exchange apparatus according to any one of claims 1 to 10, wherein
the housing body comprises a first housing wall and a second housing wall opposite to each other in a third direction; the air outlet is located between the first housing wall and the second housing wall, and two ends of the condenser are disposed on the first housing wall and the second housing wall, respectively; the third direction is perpendicular to both a first direction and a second direction.

13. The heat exchange apparatus according to any one of claims 1 to 10, wherein
the cross-flow fan comprises a fan casing, and the cross-flow impeller is rotatably disposed in the fan casing;
the fan casing comprises an inner-side flow guide surface, and the inner-side flow guide surface is configured to guide an airflow toward a side of the air outlet.

14. The heat exchange apparatus according to claim 13, wherein
the inner-side flow guide surface comprises a curved flow guide surface.

15. The heat exchange apparatus according to any one of claims 1 to 14, wherein
the heat exchange assembly further comprises a compressor, an evaporator, and an expansion valve, and the compressor, the condenser, the evaporator, and the expansion valve are in communication through a refrigerant circulation pipeline.

16. An energy storage apparatus, comprising:
an energy storage case, accommodating at least one battery; and
the heat exchange apparatus according to any one of claims 1 to 15, configured to exchange heat with the battery.

17. The energy storage apparatus according to claim 16, wherein
the heat exchange apparatus is disposed in the energy storage case, and the energy storage case is provided with an air exhaust port in communication with the air outlet.
